Europäisches Patentamt

European Patent Office

Office européen des brevets

(11) Publication number: **0 256 554**
**A2**

# EUROPEAN PATENT APPLICATION

(21) Application number: **87111976.4**

(22) Date of filing: **18.08.87**

(51) Int. Cl.⁴: **B29D 11/00** , G02B 5/30 , G11C 13/04

(30) Priority: **18.08.86 JP 191712/86**

(43) Date of publication of application:
**24.02.88 Bulletin 88/08**

(84) Designated Contracting States:
**DE FR GB**

(71) Applicant: **Teijin Chemicals, Ltd.**
**1-6-21, Nishishinbashi Minato-Ku**
**Tokyo(JP)**

(72) Inventor: **Shimizu, Akira**
**1298-1, Minamisaya-cho**
**Matsuyama-shi Ehime-ken(JP)**
Inventor: **Ohmori, Akira**
**2423-85, Nara-machi Midori-ku**
**Yokohama-shi Kanagawa-ken(JP)**

(74) Representative: **Hansen, Bernd, Dr.rer.nat. et**
**al**
**Hoffmann, Eitle & Partner Patentanwälte**
**Arabellastrasse 4**
**D-8000 München 81(DE)**

(54) **Plastic substrate for optical memory card or disk.**

(57) A plastic substrate for use in optical memory cards or disks, comprising a laminated structure of two or more film layers of a transparent thermoplastic resin having a total luminous transmittance, determined by ASTM D1003 Procedure A (at 1 mm thickness), of not less than about 80 %, said film having an absolute value of retardation of over 25 nm, and said laminated structure having an absolute value of retardation of not over 25 nm as a whole as a result of laminating the individual film layers in such an arrangement that the retardations of the individual layers negate each other.

EP 0 256 554 A2

## Plastic substrate for optical memory card or disk

This invention relates to a plastic substrate of a laminated structure which is very suitable for producing an optical memory card or disk by forming fine raisings and depressions corresponding to optically detectable signals on one surface of the substrate either as such or cut to a desired shape and dimension, or by providing an information recording layer on such a surface. Specifically, this invention relates to a laminated structure of two or more film layers of a transparent thermoplastic resin which has low birefringence, i.e. a small absolute value of retardation, and is particularly useful as a plastic substrate for optical memory cards or disks.

More specifically, this invention relates to a plastic substrate for use in optical memory cards or disks, comprising a laminated structure of two or more film layers of a transparent thermoplastic resin having a total luminous transmittance, determined by ASTM D1003 Procedure A (at 1 mm thickness), of not less than about 80 %, said film having an absolute value of retardation of over 25 nm, and said laminated structure having an absolute value of retardation of not over 25 nm as a whole as a result of laminating the individual film layers in such an arrangement that the retardations of the individual layers negate each other.

Optical articles such as optical memory cards and optical memory disks are known which optically perform recording, playback, and erasure of sounds, images, information, etc. A method by which sounds and images are reproduced by detecting fine raisings and depressions formed on a disk substrate by means of laser light, and a method by which information is recorded and reproduced by using an information recording layer formed on one surface of a substrate have recently attracted attention. Plastic substrates used for production of optical memory cards or disks are required to have good transparency, good dimensional stability and optical isotropy (or homogeneity) with low birefringence, i.e. a small absolute value of retardation. It is difficult in practice to meet these requirements because as is well known, in the production of a substrate for optical memory cards or disks by molding a thermoplastic resin, molecular orientation occurs during melt-flowing and cooling of the resin and birefringence inevitably occurs in the resulting resin substrate. Optical anisotropy (or non-homogeneity) attributed to such molecular orientation may become a fatal defect in using plastic substrates in optical articles including optical memory cards or disks. Such molecular orientation is not limited to extrusion in which it occurs in the extruding direction. It also occurs in injection molding. For example, it is considerably difficult to reduce the retardation of a large-sized polycarbonate optical memory disk substrate having a diameter of at least 130 mm to 25 nm or below.

In an attempt to avoid optical anisotropy due to molding, many polymer blends have previously been proposed on the basis of the technical idea of reducing the birefringence of the resin materials themselves.

For example, U. S. Patent No. 4,373,065 discloses a blend of 60 to 64 % by weight of polystyrene and 40 to 36 % by weight of poly(2,6-dimethylphenylene oxide); Polymer, 1985, Vol. 26, October, pages 1619-1622, a blend of 80 to 83 % by weight of polymethyl methacrylate and 20 to 17 % by weight of polyvinylidene fluoride; Polymer Preprints, Japan, Vol. 35, No. 10, pages 3364-3367, a blend of 82 % by weight of polymethyl methacrylate and 18 % by weight of polyvinyl chloride, a blend of 80 % by weight of polymethyl methacrylate and 20 % by weight of polyvinylidene fluoride, a blend of 90 % by weight of polymethyl methacrylate and 10 % by weight of poly (vinylidene fluoride-co-trifluoroethylene) (58 % VDF), a blend of 65 % by weight of polymethyl methacrylate and 35 % by weight of polyethylene oxide, a blend of 71 % by weight of polystyrene and 29 % by weight of polyphenylene oxide, a blend of 73.5 % by weight of poly(styrene-co-lauroyl maleimide (19 % LMI) and 26.5 % by weight of polyphenylene oxide, a blend of 74.5 % by weight of poly(styrene-co-phenyl maleimide (16 % PMI) and 25.5 % by weight of polyphenylene oxide, a blend of 75.5 % by weight of poly(styrene-co-cyclohexyl maleimide (17 % CMI) and 24.5 % by weight of polyphenylene oxide, a blend of 77 % by weight of poly(styrene-co-maleic anhydride) (8 % MAN) and 23 % by weight of polycarbonate, and a blend of 40 % by weight of poly(acrylonitrile-co-styrene) (25 % AN) and 60 % by weight of poly(acrylonitrile-co-butadiene) (40 % AN); Japanese Laid-Open Patent Publication No. 19656/1986, a blend of 60 % by weight of polycarbonate A and 40 % by weight of poly(styrene-co-maleic anhydride) (8.5 % MAN); and Japanese Laid-Open Patent Publication No. 18466/1987, a blend of polycarbonate A and poly(styrene-co-phenylmaleimide-co-t-butyl maleimide).

These polymer blends previously proposed are based on the technical idea of reducing the tendency of the resin molding materials themselves to undergo birefringence during molding. It has been extremely difficult to provide on an industrial scale a polymer blend which becomes optically homogeneous to the extent required for a plastic substrate for optical memory cards or disks.

Furthermore, a block copolymer composing a polystyrene oligomer and a polycarbonate oligomer chemically bonded to each other was also proposed in an attempt to reduce the ease of occurrence of birefringence during molding, in, for example, Japanese Laid-Open Patent Publication No. 19630/1986 or 108617/1986. The production itself of such a block copolymer is difficult and unsuitable for industrial practice.

Thus, no practical resin molding material has previously been proposed which has reduced ease of occurrence of birefringence.

The present inventors made investigations in order to develop a technique which can industrially advantageously provide a plastic substrate having low birefringence, i.e. a small absolute value of retardation, for use in optical memory cards or disks from an inexpensive and easily available resin molding material. Consequently, the inventors found that in regard to retardation having to do with birefringence, the retardation of a film of polycarbonate A, for example, has a positive retardation value in the extruding direction; but when this film is rotated through 90 degrees and its retardation is measured, a retardation value which has the same absolute value as the positive retardation value but a negative sign (which may be called "apparent retardation") can be obtained.

Further investigations based on this discovery have led to the discovery that when two polycarbonate films having nearly equal retardations are laminated so that their orientation directions are about 90 degrees to each other, the resulting structure has a retardation reduced to a practically satisfactory degree as a result of the retardations of the individual layers negating each other, and the retardation of the laminated structure could even be reduced to zero.

Based on this new discovery, the present inventors attempted to develop a substrate of the laminated structure which has never been proposed as a plastic substrate for optical memory cards or disks. As a result, the inventors have found that it is easy to produce a laminated structure of two or more film layers of a transparent thermoplastic resin having a total luminous transmittance, determined by ASTM D1003 Procedure A (at 1 mm thickness), of not less than about 80 %, said film having an absolute value of retardation of over 25 nm, and said laminated structure having an absolute value of retardation of not over 25 nm as a whole as a result of laminating the individual film layers in such an arrangement that the retardations of the individual layers negate each other; and that the resulting laminated structure is very suitable and useful as a plastic substrate for optical memory cards or disks. Furthermore, it has been found that this improvement is achieved as a result of laminating a plurality of film layers in such an arrangement that the retardations of the individual layers negate each other unlike the conventional polymer blend or block copolymer methods in which the resin materials themselves are restricted, and that the present invention is very advantageous in that inexpensive and easily available resin molding materials can be freely chosen.

It is an object of this invention therefore to provide a new type plastic substrate in the form of a laminated structure having excellent optical properties for use in optical memory cards or disks.

The above and other objects of this invention along with its advantages will become more apparent from the following description.

The plastic substrate of this invention for use in optical memory cards or disks is a laminated structure of two or more film layers of a transparent thermoplastic resin having a total luminous transmittance, determined by ASTM D1003 Procedure A (at 1 mm thickness), of not less than about 80 %, said film having an absolute value of retardation of over 25 nm, and said laminated structure having an absolute value of retardation of not over 25 nm as a whole as a result of laminating the individual film layers in such an arrangement that the retardations of the individual layers negate each other.

In the present invention, the total luminous transmittance of the transparent thermoplastic resin, and the retardation and the absolute value of retardation of the film are defined as follows:-

(1) Total luminous transmittance of a transparent thermoplastic resin

Total luminous transmittance (%) is determined by ASTM D1003 Procedure A on a sample film having a thickness of 1 mm prepared from the resin in accordance with ASTM D1003.

(2) Retardation of the film and the absolute value of retardation

The retardation of a sample film or substrate is measured and determined at a wavelength of 780 nm by a birefringence measuring device (made by Mizoshiri Optical Industry Co., Japan). The result is given as a positive value when the sample is a polycarbonate A film and its molecular orientation is parallel to the mounting direction of the sample mounted on the device, and as a negative value when its molecular orientation is at right angles to the aforesaid mounting direction. The absolute values of retardation denote these values from which the positive and negative signs are removed.

When the direction of molecular orientation in a polycarbonate A film is unknown, it is mounted on the device in various directions and data are obtained. The film mounting direction in which it showed a maximum positive retardation value is the direction of its molecular orientation. A film having an unknown direction of orientation is heat-softened and stretched strongly in one direction. The sign of data obtained when this stretching direction is caused to agree with the mounting direction of the sample is taken as the sign of the retardation of the film in the direction of its molecular orientation.

Retardation determined by the method (2) has either a positive sign (unit: nm) or a negative sign. For example, a monoaxially oriented film obtained by extruding the polycarbonate A as referred to hereinabove has a retardation with a positive sign. An extruded monoaxially oriented film of polystyrene has a retardation with a negative sign. As stated hereinabove with regard to the film of polycarbonate A, when the retardation of the film is measured in a direction at right angles to the direction of molecular orientation in which its positive retardation value is measured, the same absolute value of retardation having a negative sign, which may be called an apparent retardation, is obtained. When the retardation of the above polystyrene film is measured in the same way, the same absolute value of retardation having a positive sign is obtained.

In the present invention, the retardation values are those having a positive or negative sign, and the values (unit: nm) without positive or negative signs are called the absolute values of retardation.

According to this invention, the absolute value of retardation of the laminated structure as a whole can be reduced to not over 25 mm, for example several nm or less, by choosing two or more films having nearly the same absolute values of retardation of, for example, 40 nm, and the same sign, and laminating them in such an arrangement that the retardations of the two films negate each other, for example in such an arrangement that the directions of the molecular orientation of these films are nearly at right angles to each other, or in other words, the positive and negative signs of retardation negate with each other.

It has been completely unknown in the past that improvements, such as markedly reduced birefringence and excellent optical isotropy, required for a plastic substrate for optical memory cards or disks can be achieved by producing a laminated structure of resin films by advantageously utilizing the inherent retardations of the resin films.

In the present invention based on this new finding, the film layers having an absolute value of retardation of over 25 nm in the laminated structure of the invention may be laminated in any desired arrangement in which the retardations of the individual layers negated each other and the retardation of the laminated structure as a whole becomes not over 25 nm. For example, when a plurality of films having different absolute values of retardations with different signs are used, a group of films having positive retardation values and a group of films having negative retardation values are selected so that the total of the absolute values of retardation in one group is nearly equal to that of the absolute values of retardation in the other group. By laminating these film layers in such an arrangement that the retardations of the individual film layers negate each other, for example in such an arrangement that the directions which show retardation with a positive sign in these groups are at right angles to each other.

The arrangement in which the retardations of the individual film layers in the laminated structure negate each other will be more specifically described below.

For example, an extruded film of polycarbonate A shows a positive retardation in the direction of molecular orientation (the extruding direction), and an extruded film of polystyrene shows a negative retardation in the direction of molecular orientation (the extruding direction). When two films of polycarbonate A showing equal retardations are laminated such that the direction of molecular orientation of the polycarbonates A constituting these films (extruding direction) are at right angles to each other, the resulting laminated structure hardly shows birefringence. Likewise, when two poly styrene films having equal retardation values are laminated such that the directions of molecular orientation of the polystyrenes constituting them are at right angles to each other, a laminated structure scarcely showing birefringence can be obtained.

When extruded films of polycarbonate A having a retardation value of +20 nm (A), +30 nm (B), +40 nm (C), +50 nm (D), and +60 nm (E) are divided into a group composed of (A), (B) and (D) and a group composed of (C) and (E), the total of the retardations of the films in each group is +100 nm. When (A), (B) and (D) are laminated with the orientation directions (extruding direction) being in the longitudinal direction and (C) and (E) are laminated with the orientation directions (extruding directions) being in the transverse direction, the resulting laminated structure hardly shows birefringence. With the polystyrene extruded films, the same results are obtained except that the retardation values are negative. In the case of polycarbonate A extruded films having a retardation of +40 nm (F) and +60 nm (G) in the orientation direction and polystyrene extruded films having a retardation of -20 nm (H), -30 nm (I) and -50 nm (J), the total of the retardation values in the orientation direction of a group of (F) and (G) is +100 nm, and the total of the retardations of a group of (H), (I) and (J) in a direction at right angles to the orientation direction is +100 nm (the total retardation in the orientation direction is -100 nm). Hence, when these films are laminated so that the orientation of the former group overlaps the orientation of the latter group, the resulting laminated structure hardly shows birefringence. In the case of polycarbonate films having a retardation in the orientation direction of +40 nm (K) and +60 nm (L) and polystyrene films having a retardation in the orientation direction of -30 nm (M) and -50 nm (N), a group of (K) and (N) having orientation directions crossing at right angles to each other and a group of (L) and (M) having orientation directions crossing at right angles to each other both have a total retardation value of +90 nm. When these films are laminated so that the orientation directions of (K) and (M) are set in the longitudinal direction and the orientation directions of (L) and (N) are set in the lateral direction, the resulting laminate hardly shows birefringence.

Laminated structures having reduced birefringence as a result of lamination may be further stacked in any desired direction and in any sequence so long as the relative directions of the individual films in each laminate are not changed.

As will be clear from the foregoing description, in the laminated structure in accordance with this invention, only the absolute values and signs of the retardations of the individual films constituting the laminated structure are important, and the materials from which the individual films are made are quite irrelevant. Accordingly, no particular restiction is imposed on the materials for the thermoplastic resin used in forming the laminated structure of two or more film layers in this invention. Thus, the restrictions on the resin materials themselves as in the prior art have been resolved by the present invention, and inexpensive and easily available resin materials may be freely chosen and used. In practice, however, it is convenient to employ a method in which films of the same materials produced under the same conditions are laminated, or a method in which films of different materials having retardations of opposite signs in the direction of molecular orientation and nearly the same absolute values of retardation are laminated. When films of different materials are used, it is preferred to laminate them so as to provide a symmetric structure in the cut section of the resulting laminated structure in order to suppress a tendency to cause warping, distortion, etc. under the influences of temperature and/or humidity.

The transparent thermoplastic resin used in this invention has a total luminous transmittance, determined by ASTM D1003 Procedure A (at 1 mm thickness), of not less than about 80 %, preferably not less than about 90 %. If its total luminous transmittance is less than about 80 %, it is unsuitable for production of a plastic substrate for optical memory cards or disks. The two or more film layers forming the laminated structure in this invention have an absolute value of retardation of over 25 nm, particularly more than 25 nm but not exceeding 100 nm. The present invention includes not only the case where all of the two or more film layers have an absolute value of retardation of over 25 nm, but also the case where a film layer having an absolute value of retardation of not more than 25 nm is added for micro-adjustment of the retardation of the laminated structure as shown hereinabove and the case where a film layer having an absolute value of retardation of not more than 25 nm is further laid in order to protect or decorate the surface of the laminated structure or to improve the adhesion of the laminated structure to an information recording layer.

In the present invention, there is no restriction on the thermoplastic resin used, and any desired thermoplastic resin can properly be selected. For example, there can be used an acrylic resin, a styrene resin, transparent ABS resin, propylene/vinyl chloride copolymer resin, ionomers, transparent nylons, polycarbonates, polymethylpentene, cellulose derivative resins, and transparent polyesters which have a total luminous transmittance, determined by ASTM D1003 Procedure A (at 1 mm thickness), of at least about 80 %, preferably at least about 90 %. Specific examples of suitable thermoplastic resins used in the invention include poly(methyl methacrylate), poly(methyl methacrylate-co-styrene), poly(methyl methacrylate-coalpha-methylstyrene), polystyrene, poly(styrene-coacrylonitrile), transparent ABS resin, poly-(propyleneco-vinyl chloride), ionomer resins, transparent nylons (such as "Amidel TN 1540" produced by Union Carbide Corporation), poly(2,2-propylidene-diphenyl carbonate), poly(1,1-cyclohexylidene-diphenyl carbonate), poly(ethylidene-diphenyl carbonate), poly(4-methylpentene-1), celulose triacetate, cellulose tripropionate, cellulose acetate butyrate, polyarylates, and poly(ethylene terephthalate-co-2,2-dimethyl propylene terephthalate).

Although the foregoing description is directed to reduction of the birefringence of the laminated structure to nearly zero, it would be easy for those skilled in the art who have read the present specification to adjust the retardation of the laminated structure to any desired value other than 0, as required.

Methods of laminating films is known and any known method can be used in this invention so long as the retardations of the individual films used do not substantially change. For example, there can be used a method which comprises simply stacking the films and fixing the periphery of the stacked structure with a frame, a method comprising bonding the films by various adhesives such as a hot melt-type adhesive adhering at relatively low temperature of, for example, 60 to 80 °C, an anaerobic adhesive and a ultraviolet-curable adhesive, or a method comprising bonding the films by ultrasonication. There can also be used a method in which films produced by injection molding, extrusion, etc. are laminated, a method in which on a separately produced film, another film layer is formed, and a method in which multiple film layers are formed simultaneously by injection, extrusion, etc. Since in the latter embodiment, the molding conditions should be controlled considerably strictly, it is preferred to employ an embodiment in which films formed in advance are laminated in such an arrangement that the retardations of the films negate each other.

The laminated structure obtained as above is useful as a plastic substrate for producing optical memory cards or disks. Thus, according to one aspect of this invention, there is provided a method of reducing the birefringence of a plastic substrate for optical memory cards or disks, which comprises laminating two or more film layers of a transparent thermoplastic resin having a total luminous transmittance, determined by ASTM D1003 Procedure A (at 1 mm thickness), of not less than about 80 % and an absolute value of retardation of over 25 nm in such an arrangement that the retardations of the individual film layers negate each other to form an optical plastic substrate, thereby adjusting the absolute value of retardation of the laminated structure as a whole to not over 25 nm.

The resulting laminated structure of the invention may be utilized to produce an optical memory card or disk by forming fine raisings and depressions corresponding to signals on one surface of the laminated structure, either as such or after cutting the laminated structure into a desired shape and size, or by forming an information recording layer thereon by techniques known in the art.

In the present invention, the film of each of the individual film layers of the laminated structure and the thickness of the laminated structure may be properly selected. For example, the film thickness is 0.2 to 0.6 mm, and the thickness of the laminated structure is 0.4 to 1.5 mm.

The retardation of the laminated structure (plastic substrate) can be reduced to not more than 25 nm, and by selecting the manufacturing method and conditions, to not more then 15 nm, and further to not more than 10 nm. The other properties of the plastic substrate can be freely designed by selecting the materials for the films. When the optical momery card or disk produced by using the plastic substrate of the invention is used, noises can be reduced in recording and playing back signals and a high S/N ratio can be achieved. Furthermore, since the plastic substrate of this invention can be easily produced from commercially available inexpensive materials, the cost of production can be maintained low and the present invention offers a great industrial advantage.

The following Examples illustrate the present invention in more detail.

In the following examples, the retardations were measured at a wavelength of 780 nm by using a birefringence measuring device (made by Mizoshiri Optical Industry Co.).

The birefringence property was examined by using a strain viewer (HEIDON-13, made by Sinto Science Co., Ltd.)

EXAMPLE 1

In each run, polycarbonate A obtained from bisphenol A and having an average molecular weight of 28,500 was used as a starting material. It was extruded into a film form from a T-die having a lip clearance of 1.6 mm at a resin temperature of 270 to 285 °C using a melt-extruder having a screw diameter of 115 mm, passed between cooling rolls heated at 140 to 150 °C, and taken up at each of the take-up speeds indicated in Table 1 to form a film having a uniform thickness. The retardation of the film is shown in Table 1.

The direction of molecular orientation agreed with the take-up drection (MD) of the film. TD denotes the direction at right angles to MD.

6

## Table 1

| Run No. | Film thickness (mm) | Take-up speed (m/min) | Retardation (mm) | |
|---|---|---|---|---|
| | | | MD | TD |
| 1 | 0.2 | 8.1 | 38 ~ 40 | −40 ~ −38 |
| 2 | 0.3 | 6.2 | 60 ~ 62 | −62 ~ −60 |
| 3 | 0.4 | 5.8 | 67 ~ 69 | −69 ~ −67 |

The film obtained were cut into pieces having a size of 200 mm (MD) $\times$ 200 mm (TD). The cut pieces of film were stacked alternately so that the take-up directions (MD) were at right angles to each other. Five points at intervals of 20 mm were selected on a straight line pasing through the center of the resulting sample and being parallel to its one side, and the retardation in the straight line direction was measured at each point. Then, the retardation in the transverse direction was also measured in the same way on a straight line crossing the first-mentioned straight line at right angles.

The results are shown in Table 2.

### Table 2

| Ex- ample | Film thickness (mm) | Retardation (nm) | | | |
|---|---|---|---|---|---|
| | | Direction | Two layers | Four layers | Six layers |
| 1-1 | 0.2 | Machine Transverse | -2 ~ 0 -3 ~ 0 | -2 ~ 3 -2 ~ 2 | -4 ~ -1 -3 ~ 0 |
| 1-2 | 0.3 | Machine Transverse | -5 ~ 5 -4 ~ 3 | -3 ~ 2 -2 ~ 1 | -4 ~ 1 -3 ~ 0 |
| 1-3 | 0.4 | Machine Transverse | -8 ~ 7 -7 ~ 5 | -5 ~ 1 -5 ~ 2 | -6 ~ 2 -5 ~ 3 |

The absolute values of the measured retardations drastically decreased from the retardations given in Table 1 and were all less than 10.

The birefringence property was observed by using the strain viewer. With one film, the sample was white and showed considerable birefringence property. When an even number of films were laminated, the laminated structure was transparent and owed hardly any birefringence property.

EXAMPLE 2

A polycarbonate A film having a thickness of 0.2 mm obtained in the same way as in Example 1 was cut into pieces having a size of 300 mm (MD) $\times$ 300 mm (TD). Two cut pieces of film were laminated so that their take-up directions (MD) were at right angles to each other. Twenty-four radial lines were selected at 15° intervals with an arbitrarily selected radius from the center of the resulting sample as a standard. On each of these radial lines, the retardation in the radius direction was measured at a point 75 mm away from the center. The above procedure was carried out also on a film having a thickness of 0.3.mm and a film having a thickness of 0.4 mm. The results are shown in Table 3.

The retardations in any of the directions had nothing to do with the film thickness, and the absolute values of the retardations were less than 10.

### Table 3

| Example | Film thickness (mm) | Retardation (nm) | | | | | |
|---|---|---|---|---|---|---|---|
| | | Angle (degrees) | | | | | |
| | | 0 | 15 | 30 | 45 | 60 | 75 |
| 2-1 | 0.2 | 2 | -4 | -4 | 0 | -3 | -1 |
| 2-2 | 0.3 | 2 | -3 | -3 | 1 | -4 | -1 |
| 2-3 | 0.4 | 7 | -3 | -2 | -4 | -2 | -2 |
| | Angle (degrees) | 90 | 105 | 120 | 135 | 150 | 165 |
| 2-1 | 0.2 | 3 | -2 | 4 | 3 | 2 | 1 |
| 2-2 | 0.3 | 5 | -3 | 3 | 2 | 3 | 1 |
| 2-3 | 0.4 | 4 | -5 | 5 | 1 | 4 | 2 |
| | Angle (degrees) | 180 | 195 | 210 | 225 | 240 | 255 |
| 2-1 | 0.2 | -1 | -4 | 3 | -3 | -2 | -2 |
| 2-2 | 0.3 | -5 | -4 | 2 | -2 | -1 | -3 |
| 2-3 | 0.4 | -8 | -5 | 1 | -1 | -2 | -3 |
| | Angle (degrees) | 270 | 285 | 300 | 315 | 330 | 345 |
| 2-1 | 0.2 | -1 | 0 | 1 | 0 | 3 | 0 |
| 2-2 | 0.3 | -1 | 0 | 2 | 0 | 4 | 1 |
| 2-3 | 0.4 | 0 | 1 | 4 | 2 | 5 | 2 |

EXAMPLE 3

One polystyrene film having a thickness of 0.6 mm and a retardation of -98 nm in the take-up direction was sandwiched by two polycarbonate A films having a thickness of 0.2 mm and a retardation of +45 nm in the take-up direction with the take-up directions of these films being aligned. The retardation of the laminated structure was measured in a direction parallel to the take-up direction of the polycarbonate A film as a surface layer and in a direction at right angles to it. The retardations were +8 nm and -3 nm, respectively.

## Claims

1. A plastic substrate for use in optical memory cards or disks, comprising a laminated structure of two or more film layers of a transparent thermoplastic resin having a total luminous transmittance, determined by ASTM D1003 Procedure A (at 1 mm thickness), of not less than about 80 %, said film having an absolute value of retardation of over 25 nm, and said laminated structure having an absolute value of retardation of not over 25 nm as a whole as a result of laminating the individual film layers in such an arrangement that the retardations of the individual layers negate each other.

2. The plastic substrate of claim 1 wherein the thermoplastic resin has a total luminous transmittance of not less than about 90 %.

3. The plastic substrate of claim 1 wherein the laminated structure as a whole has an absolute value of retardation of not over 15 nm.

4. The plastic substrate of claim 1 wherein the thermoplastic resin is selected from the group consisting of poly(2,2-propylidene-diphenyl carbonate), poly(1,1-cyclohexylidene-diphenyl carbonate), poly-(ethylidenediphenyl carbonate), polystyrene, poly(styrene-coacrylonitrile) and poly(ethylene terephthalate-co-2,2-dimethyl propylene terephthalate).